# EUROPÄISCHE PATENTANMELDUNG

(11) **EP 3 388 191 A1**
(43) Veröffentlichungstag der Anmeldung: **17.10.2018**
(21) Anmeldenummer: 17166018.6
(22) Anmeldetag: 11.04.2017
(51) Int. Cl.: B23Q 7/04, G05B 19/418

(54) **ARBEITSVERFAHREN FÜR EINE FERTIGUNGSEINHEIT SOWIE FERTIGUNGSEINHEIT DAZU**

(71) Anmelder: Siemens Aktiengesellschaft, 80333 München (DE)
(72) Erfinder: Bitterolf, David, 91056 Erlangen (DE); Schäfers, Elmar, 90763 Fürth (DE); Weigel, Timo, 90475 Nürnberg (DE)

(57) **Zusammenfassung**

Eine Fertigungseinheit umfasst eine Werkzeugmaschine (4), einen der Werkzeugmaschine (4) räumlich und funktionell zugeordneten Industrieroboter (2) und eine mit der Werkzeugmaschine (4) und dem Industrieroboter (2) verbundene numerische Fertigungssteuerung (22). Zunächst belädt ein mit einem Greifer (16) verbundener Industrieroboter (2) eine Werkstückhalterung (36) mit einem Ausgangswerkstück, bearbeitet der Industrieroboter (2) das Ausgangswerkstück mit dem Bearbeitungswerkzeug (12) zu einem teilbearbeiteten Werkstück und belädt der Industrieroboter (2) die Werkzeugmaschine (4) mit dem teilbearbeiteten Werkstück. Sodann werden wiederholt folgende Arbeitsschritte ausgeführt:
- die Werkzeugmachine (4) bearbeitet das teilbearbeitete Werkstück zu einem Fertigwerkstück,
- während der Bearbeitung des teilbearbeiteten Werkstücks durch die Werkzeugmaschine (4) bearbeitet der Industrieroboter (2) ein weiteres Ausgangswerkstück mit dem Bearbeitungswerkzeug (12) und
- der Industrieroboter (2) entnimmt aus der Werkzeugmaschine (4) das Fertigwerkstück.

## Beschreibung

Die vorliegende Erfindung betrifft ein Arbeitsverfahren für eine Fertigungseinheit mit einer Werkzeugmaschine, einem der Werkzeugmaschine räumlich und funktionell zugeordneten Industrieroboter und einer mit der Werkzeugmaschine und dem Industrieroboter verbundenen numerischen Fertigungssteuerung.

Die vorliegende Erfindung betrifft ebenfalls eine Fertigungseinheit zur Durchführung des Verfahrens.

Numerisch gesteuerte Werkzeugmaschinen sind heutzutage fester Bestandteil einer modernen Fertigung.

Unter einem Industrieroboter versteht man allgemein eine universelle, programmierbare Maschine zur Handhabung, Montage oder Bearbeitung von Werkstücken. Industrieroboter sind für den Einsatz im industriellen Umfeld konzipiert. Ein Industrieroboter besteht im Allgemeinen aus dem Manipulator (Roboterarm), der Steuerung und einem Effektor (Werkzeug, Greifer etc.). Oftmals werden Industrieroboter mit verschiedenen Sensoren ausgerüstet. Einmal programmiert ist der Industrieroboter in der Lage, einen Arbeitsablauf autonom durchzuführen oder die Ausführung der Aufgabe abhängig von Sensorinformationen in Grenzen zu variieren.

Seit mehreren Jahren werden automatisierte Bearbeitungssysteme verwendet, die mit einem Industrieroboter zum Anbringen und Lösen eines Werkstücks an bzw. aus einer Werkzeugmaschine versehen sind. Bei einem derartigen Bearbeitungssystem bringt der Roboter ein Werkstück zur Werkzeugmaschine und die Werkzeugmaschine bearbeitet das Werkstück. Nachdem die Werkzeugmaschine die Bearbeitung des Werkstücks abgeschlossen hat, entnimmt der Roboter das Werkstück aus der Werkzeugmaschine. Im Allgemeinen erhöht die Nutzung eines Industrieroboters zum Be- und Entladen der Werkzeugmaschine die Verfügbarkeit des Bearbeitungssystems und reduziert mögliche Gefährdungen und körperlich anstrengende Tätigkeiten des Maschinenbedieners.

Je nach Fertigungsanwendung kann es vorkommen, dass der Industrieroboter in einem automatisierten Bearbeitungssystem nicht ausgelastet ist. Denn er hat als wesentliche Aufgabe nur die Be- und Entladung der Werkzeugmaschine. In der restlichen Zeit des Bearbeitungszyklus befindet sich der Industrieroboter in der Warteposition.

Der Erfindung liegt die Aufgabe zugrunde, ein Arbeitsverfahren für die eingangs genannte Fertigungseinrichtung anzugeben, das die Auslastung des Industrieroboters erhöht.

Der Erfindung liegt ebenfalls die Aufgabe zugrunde, eine Fertigungseinrichtung anzugeben, bei der die Auslastung des Industrieroboters erhöht ist.

Die erstgenannte Aufgabe wird durch ein Arbeitsverfahren mit den Merkmalen des Anspruchs 1 gelöst. Danach umfasst das Fertigungsverfahren die folgenden Schritte:
a) ein mit einem Greifer verbundener Industrieroboter belädt eine Werkstückhalterung mit einem Ausgangswerkstück,
b) der Industrieroboter führt einen ersten Effektorwechsel durch, wobei der Greifer abgelegt wird und sich der Industrieroboter funktionell mit einem Bearbeitungswerkzeug oder nacheinander mit weiteren Bearbeitungswerkzeugen als Effektor verbindet,
c) der Industrieroboter bearbeitet das Ausgangswerkstück mit dem Bearbeitungswerkzeug oder nacheinander mit den Bearbeitungswerkzeugen zu einem teilbearbeiteten Werkstück,
d) der Industrieroboter führt einen zweiten Effektorwechsel durch, wobei das Bearbeitungswerkzeug oder das zuletzt benutzte Bearbeitungswerkzeug abgelegt wird und sich der Industrieroboter mit dem Greifer funktionell verbindet,
e) der Industrieroboter belädt die Werkzeugmaschine mit dem teilbearbeiteten Werkstück,
f) die Werkzeugmachine bearbeitet das teilbearbeitete Werkstück zu einem Fertigwerkstück,
g) während der Bearbeitung des teilbearbeiteten Werkstücks durch die Werkzeugmaschine führt der Industrieroboter einen dritten Effektorwechsel durch, wobei der Greifer abgelegt und sich der Industrieroboter funktionell mit dem erstbenutzten Bearbeitungswerkzeug und ggf. nacheinander mit weiteren Bearbeitungswerkzeugen verbindet,
h) während der Bearbeitung des teilbearbeiteten Werkstücks durch die Werkzeugmaschine bearbeitet der Industrieroboter ein weiteres Ausgangswerkstück mit dem Bearbeitungswerkzeug oder nacheinander mit den Bearbeitungswerkzeugen zu einem weiteren teilbearbeiteten Werkstück,
i) während der Bearbeitung des teilbearbeiteten Werkstücks durch die Werkzeugmaschine führt der Industrieroboter einen vierten Werkzeugwechsel durch, wobei das Bearbeitungswerkzeug oder das zuletzt benutzte Bearbeitungswerkzeug abgelegt wird und sich der Industrieroboter mit einem Greifer funktionell verbindet,
j) der Industrieroboter entnimmt aus der Werkzeugmaschine das Fertigwerkstück,
k) Wiederholen der Arbeitsschritte e) bis j) bis alle Ausgangswerkstücke zu Fertigwerkstücken bearbeitet sind.

Vorteilhafte Ausgestaltungen der Erfindung sind durch die Merkmale in den Unteransprüchen angegeben.

Der Industrieroboter übernimmt also einen Teil der Bearbeitungsschritte zur Bearbeitung eines Werkstücks von der Werkzeugmaschine. Durch die gleichzeitige Bearbeitung von Werkstücken in der Fertigungseinheit durch den Industrieroboter einerseits und die Werkzeugmaschine andererseits ergibt sich eine bessere Auslastung des Industrieroboters und eine reduzierte Zykluszeit. Die maximale zur Verfügung stehende Bearbeitungszeit des Werkstücks durch den Industrieroboter ist abhängig von der Bearbeitungszeit des Werkstücks durch die Werkzeugmaschine abzüglich der für den Effektorwechsel benötigten Zeit. Während der Bearbeitung des aktuellen Werkstücks auf der Werkzeugmaschine werden durch den Industrieroboter Teilbearbeitungen an einem nächsten Werkstück durchgeführt. Eine solche Arbeitsaufteilung macht besonders dann Sinn, wenn es sich um eine Serienfertigung handelt.

Zur Bearbeitung eines Werkstücks mit einem Industrieroboter sind diejenigen Bearbeitungsvorgänge besonders geeignet, bei denen keine hohen Ansprüche an die Maßhaltigkeit und die Oberflächenqualität bestehen. Dies ist durch die kinematischen Eigenschaften des Industrieroboters bedingt. Im Vergleich zur Werkzeugmaschine besitzt der Industrieroboter eine schlechtere Wiederholgenauigkeit der Bearbeitung sowie eine höhere Nachgiebigkeit und eine höhere Schwingungsanfälligkeit im konstruktiven Aufbau. Diese, für eine Bearbeitung wichtigen Eigenschaften können allerdings durch mechanische oder regelungstechnischen Maßnahmen verbessert werden, so dass ein dermaßen ertüchtigter Industrieroboter auch anspruchsvollere Bearbeitungsaufgaben übernehmen kann.

Aufgrund der im Vergleich zur Werkzeugmaschine geringeren Steifigkeit der Struktur des Industrieroboters und auch der geringeren Leistung der Roboterspindel unterscheidet sich die Bearbeitungsstrategie, beispielsweise eine Frässtrategie, mit dem Industrieroboter deutlich von der Bearbeitungsstrategie mit einer herkömmlichen Werkzeugmaschine. Ein Unterschied liegt in den deutlich längeren Bearbeitungszeiten. Deswegen muss von einem Anwender entschieden werden, wie die einzelnen Bearbeitungsaufgaben zwischen dem Industrieroboter und der Werkzeugmaschine aufgeteilt werden. Dafür kann das ein CAM-System ( = Computer Aided Manufacturing-System) hilfreiche Unterstützung leisten. Aus der Bahnplanung und im Zusammenhang mit der Kinematik und der dynamischen Einstellung des Industrieroboters und der Werkzeugmaschine kann das CAM-System für beide Bearbeitungsmaschinen die Zeiten für jede Bearbeitungsphase abschätzen.

Die zweitgenannte Aufgabe wird durch eine Fertigungseinheit mit den Merkmalen des Anspruchs 7 gelöst. Danach umfasst die Fertigungseinheit eine Werkzeugmaschine, einen Industrieroboter und eine mit der Werkzeugmaschine und dem Industrieroboter verbundene numerische Fertigungsteuerung, wobei die numerische Fertigungssteuerung ausgebildet ist, die Werkzeugmaschine und den Industrieroboter gemäß einem derartigen Arbeitsverfahren zu steuern.

Die vorstehend beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: die wesentlichen Komponenten einer Fertigungseinheit,
- FIG 2: in einem Blockbild die einzelnen Arbeitsschritte beim Betrieb einer Fertigungseinheit,
- FIG 3: anhand eines beispielhaften Werkstücks in einem Diagramm die Nutzung der Fertigungseinheit ohne Aufteilung der Bearbeitungsaufgaben,
- FIG 4: anhand des beispielhaften Werkstücks in einem Diagramm eine optimierte Nutzung der Fertigungseinheit mit Aufteilung der Bearbeitungsaufgaben.

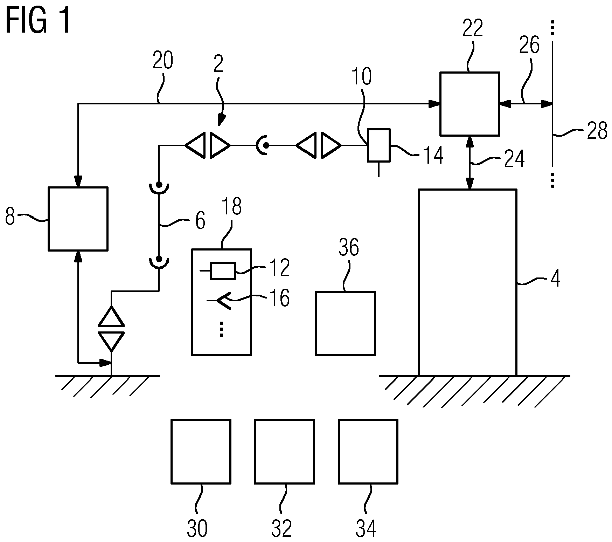

FIG 1 zeigt schematisch eine Fertigungseinheit mit einem Industrieroboter 2 und einer numerisch gesteuerten Werkzeugmaschine 4.

Der Industrieroboter 2 umfasst einen Manipulator 6 und eine Robotersteuerung 8. Ein freies Ende 10 des Manipulators 6 ist ausgebildet, mit verschiedenen Werkzeugen 12, Spindelköpfen 14, Greifern 16 usw. bestückt zu werden. Die Werkzeuge 12, Spindelköpfe 14, Greifer 16 usw. werden nachfolgend mit dem Sammelbegriff Effektor bezeichnet. Zum Bestücken und funktionellen Verbinden ist ein Effektorwechsler vorgesehen, der Zugriff auf eine räumlich zugeordnete Effektorablage 18 hat. Mit dem Effektorwechsler ist ein programmgesteuerter Effektorwechsel durchführbar.

Die Robotersteuerung 8 ist über eine erste bidirektionale Signalverbindung 20 mit einer übergeordneten numerischen Steuerung 22 verbunden. Die numerische Steuerung 22 ist beispielsweise eine Mehrkanal-Werkzeugmaschinensteuerung, bei der ein oder mehrere Kanäle für die Steuerung des Industrieroboters 2 eingerichtet sind.

Die übergeordnete numerische Steuerung 22 ist über eine zweite bidirektionale Signalverbindung 24 mit der Werkzeugmaschine 4 verbunden sowie (zumindest in der Regel) über eine dritte bidirektionale Signalverbindung 26 in ein Computernetzwerk 28 eingebunden. Eine derartige Struktur wird üblicherweise als "Distributed Numerical Control" (DNC) bezeichnet. Die Programme zur Bearbeitung von Werkstücken werden bei Bedarf mit Hilfe des DNC-Systems von einem angeschlossenen Computer in die numerische Steuerung 22 der Fertigungseinheit geladen.

Die Fertigungseinheit ist über ein Materialflusssystem in den Bearbeitungsprozess von Werkstücken eingebunden. Dazu ist dem Industrieroboter 2 räumlich und funktionell ein Eingangsmagazin 30 für unbearbeitete Ausgangswerkstücke, ein Zwischenmagazin 32 für teilbearbeitete Werkstücke und ein Ausgangsmagazin 34 für fertig bearbeitete Fertigwerkstücke zugeordnet. Der vorstehend verwendete Begriff Magazin soll für einfache und definierte Ablageorte wie auch für kontinuierlich arbeitende Material-Transportsysteme stehen.

Dem Industrieroboter 2 ist räumlich und funktionell eine Werkstückhalterung 36 zugeordnet. Die Werkstückhalterung 36 haltert ein Werkstück, während es vom Industrieroboter 2 bearbeitet wird.

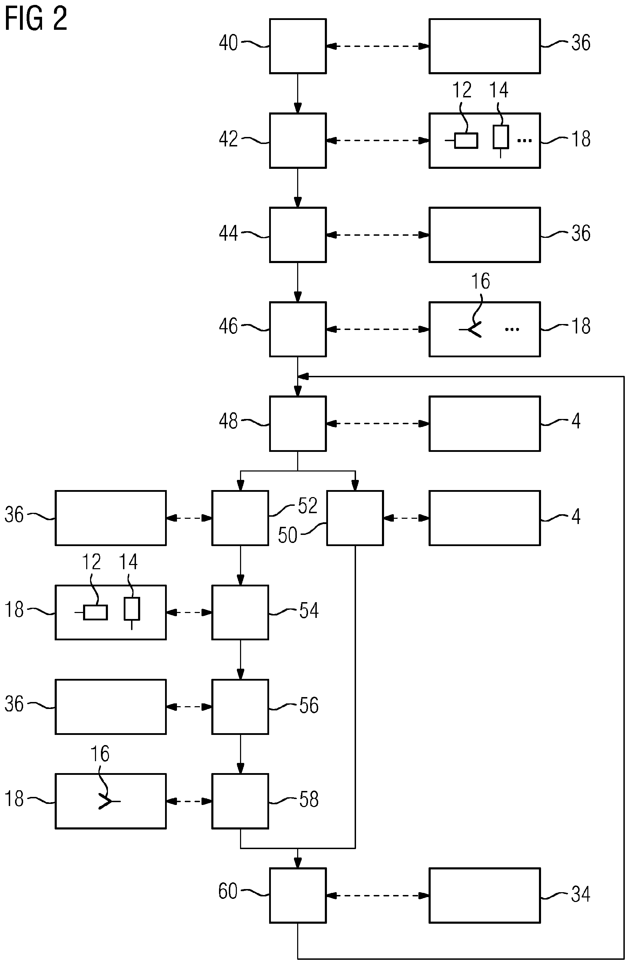

FIG 2 zeigt in einem Blockbild einen Ablaufplan mit den wesentlichen Schritten eines Arbeitsverfahrens für die Fertigungseinheit nach FIG 1.

Ausgegangen wird dabei von der Bearbeitung mehrerer unbearbeiteter Ausgangswerkstücke, die in dem Eingangsmagazin 30 zur Bearbeitung durch die Fertigungseinheit bereitgestellt werden. Der Industrieroboter 2 ist zu Beginn der Bearbeitung mit dem Greifer 16 bestückt und nimmt in einem ersten Arbeitsschritt 40 ein erstes Ausgangswerkstück vom Eingangsmagazin 30 und belädt damit die Werkstückhalterung 36. Danach verbindet sich der Industrieroboter 2 in einem zweiten Arbeitsschritt 42 funktionell mit einem ersten Bearbeitungswerkzeug. Gegebenenfalls verbindet sich der Industrieroboter vorab noch funktionell mit dem Spindelkopf 14. In einem dritten Arbeitsschritt 44 wird das in der Werkstückhalterung 36 gehalterte Werkstück entsprechend der Vorgabe des Bearbeitungsprogramms bearbeitet. Nach der Bearbeitung des Ausgangswerkstücks mit dem ersten Bearbeitungswerkzeug verbindet sich der Industrieroboter 2, wenn es das Bearbeitungsprogramm so vorgibt, nacheinander mit weiteren, verschiedenen Bearbeitungswerkzeugen als Effektor zur Bearbeitung des Werkstücks zu einem teilbearbeiteten Werkstück.

Das teilbearbeiteten Werkstück wird dann von der Werkzeugmaschine 4 entsprechend der Vorgabe des Bearbeitungsprogramms zu einem Fertigwerkstück weiter bearbeitet. Dazu führt der Industrieroboter 2 in einem vierten Arbeitsschritt 46 einen Effektorwechsel durch. Dabei wird das zuletzt benutzte Bearbeitungswerkzeug 14 auf der Effektorablage 18 abgelegt. Der Industrieroboter 2 verbindet sich dann funktionell mit dem Greifer 16. Somit ist der Industrieroboter 2 ausgerüstet, in einem fünften Arbeitsschritt 48 die Werkzeugmaschine 4 mit dem teilbearbeiteten Werkstück zu beladen. Die Werkzeugmaschine 4 bearbeitet in einem sechsten Arbeitsschritt 50 entsprechend dem Bearbeitungsprogramm das teilbearbeiteten Werkstück zu einem Fertigwerkstück.

Während der Bearbeitung des teilbearbeiteten Werkstücks durch die Werkzeugmaschine 4 im sechsten Arbeitsschritt 50 belädt der Industrieroboter 2 in einem siebten Arbeitsschritt 52 die Werkstückhalterung 36 mit einem weiteren Ausgangswerkstück aus dem Eingangsmagazin 30. Weiterhin führt der Industrieroboter 2 in einem achten Arbeitsschritt 54 einen weiteren Effektorwechsel durch, wobei der Greifer 16 auf die Werkzeugablage 18 abgelegt wird und sich der Industrieroboter 2 wieder mit dem erstbenutzten Bearbeitungswerkzeug funktionell verbindet.

Während der weiteren Bearbeitung des teilbearbeiteten Werkstücks durch die Werkzeugmaschine 4 bearbeitet der Industrieroboter 2 das in der Werkstückhalterung 36 gehalterte Ausgangswerkstück in einem neunten Arbeitsschritt 56 mit dem erstbenutzten Bearbeitungswerkzeug. Nach der Bearbeitung des Ausgangswerkstücks mit dem ersten Bearbeitungswerkzeug verbindet sich der Industrieroboter 2, wenn es das Bearbeitungsprogramm so vorgibt, nacheinander mit weiteren, verschiedenen Bearbeitungswerkzeugen als Effektor zur Bearbeitung des Werkstücks zu einem teilbearbeiteten Werkstück.

Noch immer während der Bearbeitung des teilbearbeiteten Werkstücks durch die Werkzeugmaschine 4 führt der Industrieroboter 2 in einem zehnten Arbeitsschritt 58 nach der Beendigung seines Bearbeitungsprogramms einen weiteren Effektorwechsel durch. Dabei wird das letztbenutzte Bearbeitungswerkzeug abgelegt und der Industrieroboter verbindet sich mit dem Greifer 16.

In einem elften Arbeitsschritt 60, nachdem die Werkzeugmaschine 4 das Werkstück zu dem Fertigwerkstück fertig bearbeitet und somit ihre Bearbeitung beendet hat, entlädt der Industrieroboter 2 die Werkzeugmaschine 4 und legt das Fertigwerkstück in dem Ausgangsmagazin 34 ab.

Daraufhin wird das Bearbeitungsverfahren mit der Durchführung der Arbeitsschritte 48, 50, 52, 54 ,56, 58, 60 so lange wiederholt, bis alle Ausgangswerkstücke aus dem Eingangsmagazin 30 zu einem jeweiligen Fertigwerkstück bearbeitet sind.

Am Beispiel der Bearbeitung eines Impellerrads sollen die Vorteile der Zuweisung von Bearbeitungsaufgaben von der Werkzeugmaschine 4 auf den Industrieroboter 2 verdeutlicht werden. Für eine optimierte Aufteilung einzelner Bearbeitungsaufgaben und damit eine verkürzte Zykluszeit für die Bearbeitung liefert ein CAM-System (Computer-Aided-Manufacturing-System) hilfreiche Unterstützung. Mithilfe des CAM-Systems werden aus der Geometrie des Fertigwerkstücks die einzelnen Bearbeitungsschritte beispielsweise in Form eines Teileprogramms erstellt. Dazu werden für den Industrieroboters 2 und der Werkzeugmaschine 4 aus der Bahnplanung zusammen mit den Kinematiken und den dynamischen Einstellungen des Industrieroboters 2 und der Werkzeugmaschine 4 die Bearbeitungszeiten für jede Bearbeitungsphase abgeschätzt. Anhand der Auswertung kann der Anwender die am besten geeignete Arbeitsaufteilung bestimmen.

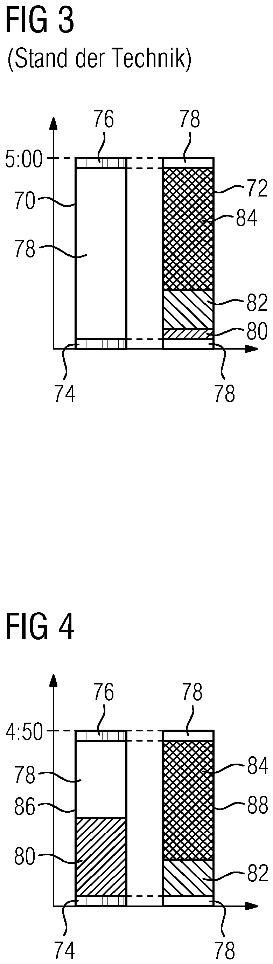

FIG 3 zeigt beispielhaft die Zykluszeit für die Herstellung des Impellerrads bei einem herkömmlichen Arbeitsverfahren, bei dem der Industrieroboter 2 die Werkzeugmaschine 4 lediglich be- und entlädt. Bei der herkömmlichen Konfiguration der Fertigungseinheit zeigt eine Säule 70 die Nutzung des Industrieroboters 2 und eine Säule 72 die Nutzung der Werkzeugmaschine 4. Bei der Nutzung 70 des Industrieroboters 2 wird nur ein geringer Anteil der Nutzungszeit zum Beladen, die Beladezeit 74, und zum Entladen, die Entladezeit 76, benötigt. Der größte Anteil der Nutzungszeit stellt die Wartezeit 78 dar. Die Werkzeugmaschine 4 bearbeitet das Werkstück vollständig, zunächst eine Grobbearbeitung 80 mittels Schruppen, dann eine Zwischenbearbeitung 82 mittels Vorschlichten und schließlich eine Endbearbeitung 84 mittels Schlichten. Bei der herkömmlichen Bearbeitung ergäbe sich so beispielsweise eine Zykluszeit von genau 5 Minuten.

Anhand des Ergebnisses der vorstehend beschriebenen Abschätzung des Zeitaufwands für einzelne Bearbeitungsschritte wird nun untersucht, welche Auswirkung eine Zuweisung der Grobbearbeitung 80 zu dem Industrieroboter 2 auf die Zykluszeit hat. Die einzelnen Bearbeitungszeiten werden wiederum mit Hilfe des CAM-Systems abgeschätzt. FIG 4 zeigt das Ergebnis der Aufteilung der Bearbeitungsaufgaben auf den Industrieroboter 2 und auf die Werkzeugmaschine 4. In FIG 4 ist wiederum die Nutzung des Industrieroboters 2 in einer Säule 86 und die Nutzung der Werkzeugmaschine 4 in einer Säule 88 dargestellt. Obwohl die Grobbearbeitung 80 am Industrieroboter 2, hier Schruppen, deutlich länger dauert als an der Werkzeugmaschine 4, ergibt sich für die Gesamtzykluszeit ein Vorteil, wenn diese Bearbeitungsoperation vom Industrieroboter 2 durchgeführt wird, während gleichzeitig die Werkzeugmaschine 4 die Zwischenbearbeitung 82 und die Endbearbeitung 84 durchführt. Im Beispiel ergibt sich eine um 10 Sekunden auf 4 Minuten und 50 Sekunden verkürzte Zykluszeit. Damit verkürzt sich die Bearbeitung pro Teil um ca. 3,4 %. Bei einer Massenfertigung ist der wirtschaftliche Vorteil für den Hersteller offensichtlich.

## Patentansprüche

1. Arbeitsverfahren für eine Fertigungseinheit mit einer Werkzeugmaschine (4), einem der Werkzeugmaschine (4) räumlich und funktionell zugeordneten Industrieroboter (2) und einer mit der Werkzeugmaschine (4) und dem Industrieroboter (2) verbundenen numerischen Fertigungssteuerung (22), mit den Schritten:
a) ein mit einem Greifer (16) verbundener Industrieroboter (2) belädt eine Werkstückhalterung (36) mit einem Ausgangswerkstück,
b) der Industrieroboter (2) führt einen ersten Effektorwechsel durch, wobei der Greifer (16) abgelegt wird und sich der Industrieroboter (2) funktionell mit einem Bearbeitungswerkzeug (12) oder nacheinander mit weiteren Bearbeitungswerkzeugen als Effektor verbindet,
c) der Industrieroboter (2) bearbeitet das Ausgangswerkstück mit dem Bearbeitungswerkzeug (12) oder nacheinander mit den Bearbeitungswerkzeugen zu einem teilbearbeiteten Werkstück,
d) der Industrieroboter (2) führt einen zweiten Effektorwechsel durch, wobei das Bearbeitungswerkzeug (12) oder das zuletzt benutzte Bearbeitungswerkzeug (12) abgelegt wird und sich der Industrieroboter (2) mit dem Greifer (16) funktionell verbindet,
e) der Industrieroboter (2) belädt die Werkzeugmaschine (4) mit dem teilbearbeiteten Werkstück,
f) die Werkzeugmachine (4) bearbeitet das teilbearbeitete Werkstück zu einem Fertigwerkstück,
g) während der Bearbeitung des teilbearbeiteten Werkstücks durch die Werkzeugmaschine (4) führt der Industrieroboter (2) einen dritten Effektorwechsel durch, wobei der Greifer (16) abgelegt und sich der Industrieroboter (2) funktionell mit dem erstbenutzten Bearbeitungswerkzeug (12) und ggf. nacheinander mit weiteren Bearbeitungswerkzeugen verbindet,
h) während der Bearbeitung des teilbearbeiteten Werkstücks durch die Werkzeugmaschine (4) bearbeitet der Industrieroboter (2) ein weiteres Ausgangswerkstück mit dem Bearbeitungswerkzeug (12) oder nacheinander mit den Bearbeitungswerkzeugen zu einem weiteren teilbearbeiteten Werkstück,
i) während der Bearbeitung des teilbearbeiteten Werkstücks durch die Werkzeugmaschine (4) führt der Industrieroboter (2) einen vierten Werkzeugwechsel durch, wobei das Bearbeitungswerkzeug (12) oder das zuletzt benutzte Bearbeitungswerkzeug (12) abgelegt wird und sich der Industrieroboter (2) mit einem Greifer (16) funktionell verbindet,
j) der Industrieroboter (2) entnimmt aus der Werkzeugmaschine (4) das Fertigwerkstück,
k) Wiederholen der Arbeitsschritte e) bis j) bis alle Ausgangswerkstücke zu Fertigwerkstücken bearbeitet sind.

2. Arbeitsverfahren nach Anspruch 1,
**dadurch gekennzeichnet, dass** die Bearbeitung des Ausgangswerkstücks mit dem Industrieroboter (2) trennende Bearbeitungsschritte umfasst.

3. Arbeitsverfahren nach Anspruch 2,
**dadurch gekennzeichnet, dass** die Bearbeitung des Ausgangswerkstücks mit dem Industrieroboter (2) eine Schruppbearbeitung umfasst.

4. Arbeitsverfahren nach einem der vorstehenden Ansprüche,
**dadurch gekennzeichnet, dass** die Bearbeitung des teilbearbeiteten Werkstücks mit der Werkzeugmaschine (4) eine Schlichtbearbeitung umfasst.

5. Arbeitsverfahren nach einem der vorstehenden Ansprüche,
**dadurch gekennzeichnet, dass** dem Industrieroboter (2) eine Werkstückhalterung (36) räumlich und funktionell zugeordnet ist und dass das Ausgangswerkstück während der Bearbeitung durch den Industrieroboter (2) von der Werkstückhalterung (36) gehalten wird.

6. Arbeitsverfahren nach einem der vorstehenden Ansprüche,
**dadurch gekennzeichnet, dass** der Industrieroboter (2) die Werkstückhalterung (36) mit dem Ausgangswerkstück belädt und entlädt.

7. Fertigungseinheit, wobei die Fertigungseinheit eine Werkzeugmaschine (4), einen Industrieroboter (2) und eine mit der Werkzeugmaschine (4) und dem Industrieroboter(2) verbundene numerische Fertigungsteuerung (22) umfasst, wobei die numerische Fertigungssteuerung (22) ausgebildet ist, die Werkzeugmaschine (4) und den Industrieroboter (2) gemäß einem Arbeitsverfahren nach einem der Ansprüche 1 bis 6 zu steuern.
